# FASCICULE DE BREVET EUROPEEN

(11) **EP 3 649 850 B1**
(45) Date de publication et mention de la délivrance du brevet: **25.08.2021**
(21) Numéro de dépôt: 18205447.8
(22) Date de dépôt: 09.11.2018
(51) Int. Cl.: A01J 9/04

(54) **DISPOSITIF POUR LE REFROIDISSEMENT DE LAIT ET PROCÉDÉ DE GESTION D'UN DISPOSITIF POUR LE REFROIDISSEMENT DE LAIT**
VORRICHTUNG FÜR DIE KÜHLUNG VON MILCH, UND STEUERVERFAHREN EINER VORRICHTUNG FÜR DIE KÜHLUNG VON MILCH
DEVICE FOR COOLING MILK AND METHOD FOR MANAGING A DEVICE FOR COOLING MILK

(43) Date de publication de la demande: 13.05.2020
(73) Titulaire: GEA Farm Technologies Japy SAS, 21850 Saint-Apollinaire (FR)
(72) Inventeur: GLAUDA, Jean-Marie, 21850 Saint Apollinaire (FR); DELOR, Olivier, 21640 Vougeot (FR); ROTHMANN, Samantha, 21121 Ahuy (FR)
(74) Mandataire: Kleine, Hubertus

(56) Documents cités:
- EP-A1- 1 388 281
- WO-A1-97/05768
- US-A1- 2008 230 606

## Description

La présente invention a pour objet un dispositif pour le refroidissement de lait et un procédé de gestion d'un dispositif pour le refroidissement de lait.

EP 1 388 281 A1 divulge un dispositif pour le refroidissement de lait et avec un terminal de contrôle qui peut échanger des données avec un ordinateur.

Un dispositif pour le refroidissement de lait comprend typiquement un réservoir de refroidissement de lait et d'autres éléments à l'extérieur du réservoir de refroidissement de lait. Il peut s'agir, entre autres, d'un terminal de commande et/ou d'une unité de refroidissement simple ou multiple.

Il existe actuellement la possibilité, pour administrer un tel dispositif pour le refroidissement de lait, de transmettre des données à un ordinateur externe, par ex. un téléphone portable ou une tablette, de sorte que l'opérateur reçoit en permanence des informations sur l'état du dispositif et éventuellement aussi du lait qui y est stocké.

Au lieu d'un transfert de données constituant un pur échange d'informations, on pourrait aussi réaliser un accès d'ordinateurs externes au dispositif pour le refroidissement de lait. Un tel accès au dispositif par des ordinateurs externes peut toutefois entraîner des accidents graves car le dispositif est une sorte de machine accessible et l'opérateur peut pénétrer dans la machine ou le réservoir de refroidissement de lait en passant par un trou d'homme pour effectuer, par exemple, des travaux d'entretien et de vérification. Si la machine est alors mise en marche par un ordinateur externe, cela peut entraîner des blessures de l'opérateur voire, dans le cas le plus grave, sa mort.

On connaît des dispositifs de commutation dont l'actionnement établit une connexion par Internet temporaire avec le dispositif pour le refroidissement de lait. Un accès d'ordinateurs externes est possible via cette connexion par Internet. Cependant, l'accès n'est pas limité dans le temps et un échange de données, autrement dit une transmission de données et d'informations sans autorisation d'accès, dépend de l'état d'activation de la connexion par Internet.

La présente invention a donc pour objet de proposer un dispositif pour le refroidissement de lait et un procédé pour son administration rendant possible un accès externe mais empêchant en même temps les situations accidentogènes. Cet objet est atteint dans la présente invention par un dispositif selon la revendication 1 et un procédé selon la revendication 6.

Un dispositif pour le refroidissement de lait comprend ici au moins un réservoir de refroidissement de lait accessible par un trou d'homme qui est fermé par un couvercle et au moins un circuit de refroidissement pour le refroidissement de lait à l'intérieur du réservoir de refroidissement de lait, le réservoir de refroidissement de lait présentant en outre un dispositif de nettoyage et le dispositif pour le refroidissement de lait présentant un terminal de contrôle à portée de vue du réservoir de refroidissement de lait. Le terminal de contrôle peut ainsi être placé à peu de distance du réservoir de refroidissement de lait ou directement sur le réservoir de refroidissement de lait.

Le dispositif peut fonctionner dans différents modes. Les modes de fonctionnement typiques sont un mode de refroidissement et/ou de remplissage, un mode de repos ou de veille, un mode de nettoyage ou encore un mode de vidange.

Des situations particulièrement dangereuses pour l'opérateur surviennent dans le mode de nettoyage ou lors des changements de mode. Tant que le changement de mode et le mode de nettoyage sont surveillés par une personne placée au terminal de contrôle, à portée de vue du réservoir de refroidissement de lait, cette personne peut vérifier si ses manipulations peuvent nuire à un opérateur qui se trouve sur ou dans le réservoir de refroidissement de lait.

Lors d'un accès externe, par exemple dans le cadre d'un entretien à distance, cette vérification n'a habituellement pas lieu.

Afin de s'assurer, même lors d'un accès externe, que le dispositif pour le refroidissement de lait est vérifié avant que les ordres de commande ou de régulation soient émis, le terminal de contrôle comporte un élément d'actionnement.

Il faut qu'une personne autorisée actionne l'élément d'actionnement du terminal de contrôle pour que l'accès au dispositif de nettoyage d'un ordinateur externe, qui n'est pas associé au dispositif selon la présente invention, puisse avoir lieu. L'autorisation est limitée dans le temps à l'intérieur d'un intervalle de temps.

La personne qui se trouve au terminal de contrôle et qui a, dans l'idéal, vérifié au préalable la présence d'autres opérateurs dans le dispositif, est alors responsable du fonctionnement sans accident.

En outre, le terminal de contrôle est équipé pour émettre des données, en particulier concernant les conditions de process dans le réservoir de refroidissement de lait, indépendamment de l'état de l'élément d'actionnement, autrement dit qu'un accès d'un ordinateur externe au dispositif pour le refroidissement de lait soit autorisé ou non.

De ce fait, une consultation des données par des ordinateurs externes est possible non seulement pendant l'accès, mais aussi quand aucun accès n'a été autorisé.

Des variantes de réalisation préférées de la présente invention sont exposées dans les sous-revendications.

L'accès de l'ordinateur externe au dispositif pour le refroidissement de lait peut de préférence être limité dans le temps. Une commande correspondante peut être installée sur le terminal de contrôle.

En outre, l'actionnement de l'élément d'actionnement peut aussi autoriser l'accès de l'ordinateur externe à des composants du circuit de refroidissement. Des composants correspondants peuvent comprendre, de préférence, le moteur d'un compresseur, une commande de vannes et/ou des ventilateurs pour l'extraction de la chaleur d'un condenseur. L'accès peut consister en une commande et/ou un réglage de certains éléments ou de l'ensemble du processus de refroidissement. Un accès peut aussi commencer seulement un refroidissement avec des paramètres fixés.

Le dispositif peut, tout aussi avantageusement, comporter un agitateur pour homogénéiser le lait dans le réservoir de refroidissement de lait, et l'actionnement de l'élément d'actionnement produit alors une autorisation d'accès d'un ordinateur externe à l'agitateur. Lors de l'accès, la vitesse d'agitation peut être adaptée ou bien l'agitation peut être mise en route.

L'actionnement de l'élément d'actionnement peut être sécurisé par mot de passe. Une demande correspondante de mot de passe peut être programmée sur le terminal de contrôle.

L'élément d'actionnement peut être un tableau de commande numérique ou un bouton d'actionnement matériel. L'élément d'actionnement peut toutefois aussi être conformé comme une sûreté avec une serrure, qui est débloquée par la personne placée au terminal de contrôle au moyen d'une clé ou d'un badge. Diverses autres variantes sont envisageables, par ex. des systèmes RFID pour empêcher les accès non autorisés.

Le terminal de contrôle peut comporter un affichage du temps d'accès restant pour l'ordinateur externe, par ex. sous la forme d'un compte à rebours. Cela permet à la personne placée au terminal de contrôle de vérifier quand elle peut à nouveau manipuler le dispositif sans danger, par ex. pour poursuivre un entretien. L'affichage peut également s'effectuer sur l'ordinateur externe.

La présente invention concerne également un procédé de gestion d'un dispositif pour le refroidissement de lait. La gestion comprend la régulation et/ou la commande du dispositif et/ou de certaines parties de ce dispositif, y compris le passage d'un mode de fonctionnement du dispositif à un autre (mode de repos, mode de nettoyage, mode de refroidissement, etc.). La gestion comprend en outre la communication du dispositif avec d'autres ordinateurs externes, par ex. pour consulter et afficher sur ces ordinateurs l'état des conditions de process du dispositif de refroidissement de lait. En particulier, le dispositif pour le refroidissement de lait peut être le dispositif selon la présente invention décrit précédemment.

Le dispositif pour le refroidissement de lait comprend un réservoir de refroidissement du lait accessible par un trou d'homme qui est fermé par un couvercle et au moins un circuit de refroidissement pour refroidir du lait à l'intérieur du réservoir de refroidissement du lait.

Le réservoir de refroidissement de lait comporte un dispositif de nettoyage avec lequel un mode de nettoyage peut être exécuté. Celui-ci est de préférence disposé sur ou dans le réservoir de refroidissement de lait.

Le dispositif pour le refroidissement de lait comporte un terminal de contrôle à portée de vue du réservoir de refroidissement de lait, qui permet de préférence une commande et/ou une régulation de certaines parties du dispositif.

Le terminal de contrôle présente un élément d'actionnement dont l'actionnement déclenche au moins une autorisation de réglage du mode de nettoyage par un ordinateur externe.

Le dispositif pour le refroidissement de lait exécute en outre une transmission de données à l'ordinateur externe ou à d'autres ordinateurs externes quel que soit l'état de l'élément d'actionnement.

La transmission de données peut de préférence être continue, afin que l'on puisse consulter à tout moment l'état du dispositif pour le refroidissement de lait.

L'autorisation est limitée dans le temps à l'intérieur d'un intervalle de temps.

D'autres perfectionnements avantageux du dispositif font l'objet des sous-revendications.

Ledit intervalle de temps d'accès peut avantageusement être de 40 minutes au maximum, en particulier de 10 à 30 minutes. Il existe des situations dans lesquelles la personne placée au terminal de contrôle doit quitter son poste. La limitation du temps prend toutefois en compte l'aspect de sécurité de ces situations.

L'actionnement de l'élément d'actionnement permet en outre d'autoriser le réglage d'un mode de refroidissement par un ordinateur externe. Le réglage du mode de refroidissement comprend, entre autres, le commencement du mode de refroidissement et le réglage de l'agitateur et du circuit de refroidissement. L'actionnement de l'élément d'actionnement peut en outre autoriser la mise en service ou un changement de mode de fonctionnement du réservoir de refroidissement de lait et du terminal de contrôle par un ordinateur externe. Par exemple, un passage du mode de repos au mode de lavage peut entraîner une élévation de la température de résistances dans le terminal de contrôle, ce qui peut être dangereux pour le technicien de maintenance lors de la vérification du terminal de contrôle. Ce technicien de maintenance peut toutefois autoriser lui-même l'accès de l'ordinateur externe à l'aide de l'élément d'actionnement après la fin des travaux.

L'actionnement de l'élément d'actionnement déclenche en outre une autorisation d'un mode de test pour l'accès individuel à différents éléments du dispositif de refroidissement du lait, en particulier de parties de l'agitateur, du dispositif de nettoyage et/ou du circuit de refroidissement. Dans ce mode de test, des experts, par exemple des techniciens d'entretien, peuvent vérifier certaines parties par télémaintenance, par exemple le réglage du circuit de refroidissement, et procéder si besoin à des ajustements fins.

Il est avantageux que l'accès de l'ordinateur externe au dispositif pour le refroidissement de lait puisse se faire par communication sans fil, par exemple par radio. Au lieu ou en complément de cela, la communication peut passer par un réseau filaire. L'accès peut ainsi s'effectuer, en cas de besoin, depuis un central de commande distant, de sorte qu'il n'est pas nécessaire de maintenir du personnel spécialisé sur site.

Les données pour la transmission des informations sont transmises par le dispositif pour le refroidissement de lait à une infrastructure informatique, en particulier un nuage, de telle sorte que les données transmises puissent être consultées simultanément par plusieurs ordinateurs, en particulier par une communication sans fil.

Lesdites données transmises peuvent comprendre au moins une ou plusieurs des informations suivantes :
température du lait ;
quantité de lait ;
vitesse d'agitation ;
conditions de nettoyage en mode de nettoyage, de préférence température d'un ou plusieurs produits nettoyants et/ou dosage du ou des produits nettoyants ;
un ou plusieurs diagrammes d'évolution concernant de préférence la température du lait, la quantité de lait et/ou le mode de nettoyage ;
historique, de préférence de changements du processus, de préférence de changements du mode de fonctionnement, de messages d'erreur et/ou de changements de valeurs limites ;
affichage des valeurs limites existantes ;
alarme ; et/ou
affichage du mode de fonctionnement actuel, en particulier du mode de refroidissement, de l'arrêt, du mode de vidange ou du mode de nettoyage.

L'actionnement de l'élément d'actionnement permet en particulier, et de préférence, d'autoriser le réglage de valeurs limites ou de modes de fonctionnement.

A la fin de l'intervalle de temps, le tableau de commande pour l'accès au réglage des valeurs limites ou au réglage des modes de fonctionnement peut être affiché sur des ordinateurs externes, mais désactivé. L'opérateur de l'ordinateur externe sait ainsi où il peut accéder après l'autorisation sans devoir d'abord s'informer. Il gagne ainsi du temps et peut exploiter de façon optimale l'intervalle de temps d'accès.

Le réservoir de refroidissement de lait accessible est typiquement accessible à travers un trou d'homme qui est fermé par un couvercle.

Dans une variante d'exécution préférée de la présente invention, le trou d'homme présente un capteur qui affiche l'état d'ouverture du couvercle, l'accès de l'ordinateur externe étant désactivé quand l'état d'ouverture du couvercle change. Un double niveau de sécurité est ainsi prévu pour l'accès d'ordinateurs externes.

D'autres avantages, caractéristiques et détails de la présente invention ressortent du descriptif qui suit, dans lequel un exemple de réalisation de l'invention est expliqué de façon détaillée à l'aide des figures. L'homme de l'art peut aussi utilement considérer séparément les caractéristiques divulguées en combinaison dans les figures, le descriptif et les revendications et les regrouper dans d'autres combinaisons pertinentes.

Les figures représentent :
Fig. 1 un schéma d'un dispositif pour le refroidissement de lait selon la présente invention, comprenant un réservoir de refroidissement de lait ;
Fig. 2 un schéma de l'échange de données entre un terminal de contrôle pour la surveillance et/ou la commande du réservoir de refroidissement de lait et une unité de calculateur externe ;
Fig. 3 une première vue d'une première fenêtre de commande du terminal de contrôle ;
Fig. 4 une deuxième vue d'une première fenêtre de commande du terminal de contrôle ;
Fig. 5 une troisième vue d'une première fenêtre de commande du terminal de contrôle ;
Fig. 6 une quatrième vue d'une première fenêtre de commande du terminal de contrôle ;
Fig. 7 une vue d'une deuxième fenêtre de commande d'un ordinateur externe.

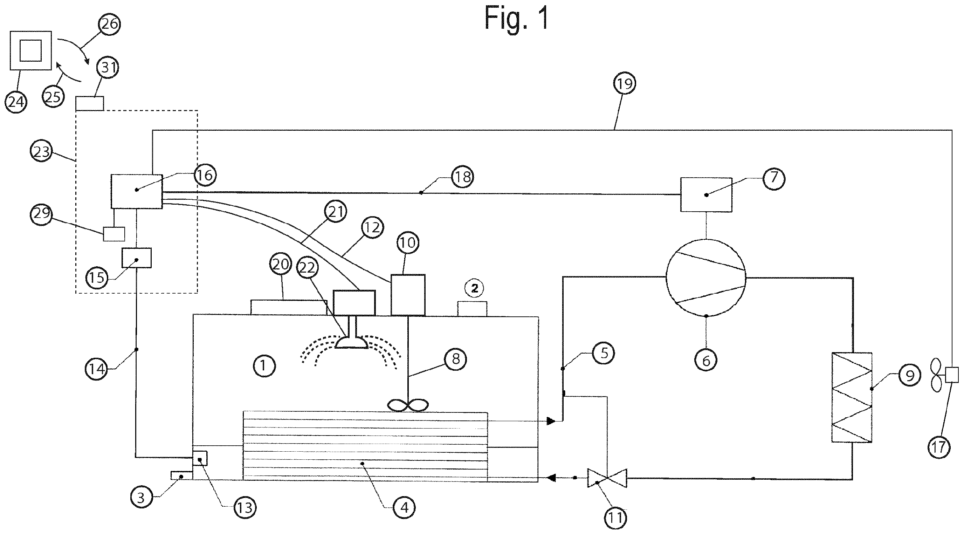

La Fig. 1 représente un dispositif pour le refroidissement de lait avec un réservoir de refroidissement de lait 1, les termes de réservoir de refroidissement de lait, réservoir de lait et réservoir étant utilisés comme des synonymes dans la présente demande. Le réservoir de refroidissement de lait 1 présente une entrée de lait 2 dans sa partie supérieure et une sortie de lait 3 dans la partie inférieure du réservoir 1. Il présente en outre une partie d'un dispositif de refroidissement comprenant un circuit de refroidissement 5.

Le circuit de refroidissement 5 présente, de manière connue en soi, un compresseur 6, un condenseur 9, une soupape d'expansion thermostatique 11 et un évaporateur 4. Le compresseur 6 est entraîné par le moteur 7. Le circuit de refroidissement contient un réfrigérant en circulation, qui change d'état d'agrégation à l'intérieur du circuit de refroidissement. Pour faire passer le fluide de l'état liquide à l'état gazeux, l'évaporateur 4 prend de la chaleur d'évaporation dans l'environnement, ce qui provoque un refroidissement de l'environnement. Ce phénomène se déroule dans l'évaporateur 4. Celui-ci est disposé sur la face inférieure du réservoir de refroidissement de lait, de préférence le long d'une partie de la surface d'enveloppe cylindrique de celui-ci, de sorte que le lait se refroidit en cédant de la chaleur à l'évaporateur. Afin d'empêcher le lait de se congeler, une sonde de température 13 est disposée, en particulier dans la partie inférieure du réservoir 1, pour surveiller la température du lait et réguler en conséquence les différents composants du circuit de refroidissement 5.

En option, et non représenté, un capteur de volume de lait, par ex. un capteur de niveau de remplissage et/ou un contacteur de niveau, peut être prévu pour permettre un réglage fin du refroidissement en fonction du volume de lait.

Le condenseur 9 du circuit de refroidissement 5 est disposé en dehors du réservoir de refroidissement de lait 1 mais il fait partie du dispositif pour le refroidissement de lait, comme le reste du circuit de refroidissement. Il sert à faire passer le fluide de l'état gazeux à l'état liquide. De la chaleur de condensation est alors produite et évacuée dans l'environnement. Pour cela, le condenseur 9 présente un ventilateur 17 qui régule l'évacuation de la chaleur.

La sonde de température 13 détermine la température du lait dans le réservoir de refroidissement de lait 1 et la transmet par une ligne de signal à un terminal de contrôle 23 à proximité du réservoir 1. Le terminal de contrôle 23 est placé à portée de vue du réservoir 1 et de préférence à moins de 10 mètres, en particulier moins d'un mètre du réservoir 1, ou de préférence, et en particulier, relié au réservoir 1.

Le terminal de contrôle 23 dispose d'une unité de commande et/ou d'analyse 16 qui est conçue pour recevoir un signal de capteur transmis sur la ligne de signal 14. Celui-ci peut être converti par un convertisseur de mesure 15 en un format adapté à l'unité de commande et/ou d'analyse. Le convertisseur de mesure 15 de cette variante d'exécution est associé au terminal de contrôle 23. Il peut cependant aussi, en option, être disposé au niveau de la sonde de température 13, ou bien la sonde de température 13 aussi bien que le terminal de contrôle 23 peuvent disposer chacun d'un convertisseur de mesure 15.

En outre, le terminal de contrôle 23 possède une unité de sortie, par exemple un écran, sur lequel les paramètres de process peuvent s'afficher, entre autres, et le réglage des modes de fonctionnement du réservoir de refroidissement de lait 1 peut être effectué.

L'unité de commande et/ou d'analyse 16 assure, en fonction d'un capteur de signal transmis, par ex. par la sonde de températures 13, une commande et/ou une régulation des différents composants du circuit de refroidissement. Cela concerne, entre autres, la commande et/ou la régulation du moteur 7 du compresseur, et facultativement le pilotage du ventilateur 17 et/ou de la soupape d'expansion 11. Pour cela, le terminal de contrôle possède une ligne de signal 18 et 19 pour chacun.

Le réservoir 1 présente en outre un agitateur 8 avec un moteur 10 pour brasser le lait refroidi, de sorte que le lait soit uniformément guidé sur la surface de refroidissement du réservoir 1 et empêché de se congeler et qu'il soit en même temps homogénéisé.

Le fonctionnement de l'agitateur 8, en particulier la vitesse d'agitation, est lui aussi réglable par la commande et/ou la régulation du moteur 10 par le terminal de contrôle 23, en particulier par l'unité de commande et/ou d'analyse 16. Pour cela, l'agitateur présente une ligne de signal 12 pour la connexion au terminal de contrôle 23.

Le réservoir 1 présente en outre un dispositif de nettoyage 20. Le dispositif de nettoyage présente, dans la Fig. 1, une buse à son extrémité et une arrivée en forme de barre. Une pompe de dosage et un réservoir pour un ou plusieurs produits de nettoyage peuvent être disposés à l'extérieur du réservoir 1. Le nettoyage peut être réalisé, par exemple, comme un nettoyage en place CIP ou selon d'autres normes usuelles dans le domaine alimentaire.

Le moment du début, la durée et le dosage du ou des produits de nettoyage par le dispositif de nettoyage 20 peuvent être réglés, autrement dit commandés et/ou régulés, par un signal correspondant transmis sur la ligne de signal 21 par le terminal de contrôle 23, en particulier par l'unité de commande et/ou d'analyse.

Le dispositif de nettoyage peut comporter des capteurs correspondants, par ex. des débitmètres ou des sondes de température, avec lesquels la quantité de dosage pendant le nettoyage ou d'autres grandeurs de mesure, par exemple la température du produit de nettoyage, peuvent être déterminées. Ces signaux de capteurs peuvent être transmis via la ligne de signal 21 à l'unité de commande et/ou d'analyse 16.

Le convertisseur de mesure 15 peut aussi convertir les signaux de capteur des autres capteurs susmentionnés ou des signaux de commande pour la commande de différents composants du réservoir de refroidissement de lait.

Les lignes de signal de la présente invention peuvent être réalisées comme des lignes de câbles, mais une conception comme des lignes de signal sans fil est également possible.

Le terminal de contrôle 23 présente un module émetteur 31, de préférence un module radio, pour la transmission de signaux à un ordinateur externe 24, par exemple un appareil mobile tel qu'un téléphone mobile ou une tablette. L'ordinateur externe peut aussi être un panneau de contrôle d'un système de contrôle-commande de niveau supérieur.

La transmission des signaux comprend une première voie de transmission de signaux 25 du terminal de contrôle 23 à l'ordinateur externe 24 et une deuxième voie de transmission de signaux 26 de l'ordinateur externe 24 au terminal de contrôle, cette deuxième voie de transmission de signaux 26 servant à la commande et/ou à la régulation de certains dispositifs du réservoir de refroidissement de lait, en particulier à la commande et/ou la régulation du dispositif de nettoyage 20, et éventuellement à la commande et/ou la régulation du dispositif de refroidissement, en particulier du moteur 7 et du ventilateur 17 du dispositif de refroidissement, de l'agitateur 8 et/ou du terminal de contrôle 23 lui-même.

Le terminal de contrôle 23 peut, par exemple, représenter une cause de blessure à cause de la chaleur des résistances internes au cours d'un autotest ou de travaux d'entretien.

Une application principale est la commande du dispositif de nettoyage 20. La commande et la régulation de ce dispositif de nettoyage peuvent être exécutées par l'ordinateur externe 24.

Le problème d'une commande des différents dispositifs par un ordinateur externe 24 est que le réservoir de refroidissement de lait 1 est un réservoir accessible. Le réservoir de refroidissement de lait 1 présente, dans la construction habituelle, un trou d'homme 27. Un opérateur peut passer par ce trou d'homme 27 pour pénétrer à l'intérieur du réservoir 1 et, par exemple, inspecter le réservoir pour rechercher des impuretés résiduelles ou réparer certains composants à l'intérieur du réservoir 1.

Si un opérateur se tient à l'intérieur du réservoir de refroidissement de lait, il existe potentiellement un risque de blessure de cet opérateur si l'ordinateur externe actionne différents dispositifs du réservoir de refroidissement de lait 1.

Des capteurs de contact contrôlant l'état d'ouverture du réservoir sont insuffisants, parce que le couvercle du trou d'homme peut, par exemple, se refermer après qu'on l'a franchi.

Alors que l'agitateur 8 tourne en général relativement lentement, le dispositif de nettoyage 20 représente un danger accru. Il utilise le plus souvent des produits de nettoyage agressifs.

Le ventilateur 17 du condenseur 9 ou les résistances à l'intérieur du terminal de contrôle 23 représentent d'autres causes de blessures. Ces deux composants sont inactifs lorsque le réservoir de refroidissement de lait 1 est vidé et prêt à remplir. Une commande et/ou régulation par l'ordinateur externe peut, ici aussi, entraîner accidentellement des blessures d'un opérateur qui effectue des travaux sur le dispositif.

Afin d'éviter de telles blessures, le terminal de contrôle 23 présente un élément de commande 29 qui établit un contact limité dans le temps pour activer le deuxième voie de transmission de signaux 26 en vue d'un accès par l'ordinateur externe 24.

Ce contact limité dans le temps permet à l'opérateur de l'ordinateur externe 24 de commander certains dispositifs et/ou programmes qui sont sinon désactivés, par exemple grisés, dans le menu de l'ordinateur externe.

La deuxième voie de transmission de signaux 26 pour la commande et/ou la régulation concerne donc en particulier le dispositif de nettoyage, mais peut être étendue à d'autres commandes et/ou régulations telles que les composants du circuit de refroidissement 5 ou le terminal de contrôle 23.

L'accès ne peut être autorisé que par l'élément de commande 29 du terminal de contrôle 23, la personne activant l'élément de commande 29 ayant vérifié au préalable si quelqu'un se trouve dans la zone des sources de danger susmentionnées, autrement dit
A se trouve dans le réservoir 1
B effectue des travaux d'entretien et/ou de nettoyage au niveau du condenseur 9 ou
C effectue des travaux d'entretien et/ou de nettoyage au niveau du terminal de contrôle 23, impliquant en particulier l'ouverture du boîtier du terminal de contrôle.

S'il n'y a personne, l'opérateur peut activer à l'aide de l'élément de commande 29 l'accès de l'ordinateur externe et ainsi la deuxième voie de transmission de signaux 26.

Des essais de réglage du dispositif de nettoyage 20 peuvent alors être effectués à un intervalle de temps fixe, par ex. par l'ordinateur externe 24.

À la fin de l'intervalle de temps, la deuxième voie de signalisation est désactivée automatiquement, et avec elle l'accès de l'ordinateur externe 24.

Il est en outre souhaitable, que l'élément d'actionnement 29 ait été activé ou pas, de garantir une transmission de signaux, par ex. par la première voie de signalisation 25, du réservoir de refroidissement de lait ou du terminal de contrôle 23 à l'ordinateur externe 24 ou à d'autres ordinateurs externes.

Cette transmission de signaux du réservoir de refroidissement de lait à l'ordinateur externe est ainsi constamment maintenue, sauf en cas de défaut technique. La transmission de signaux garantit la transmission de données de process à un ou plusieurs opérateurs, par ex. la vitesse d'agitation, la température du lait, les paramètres de réglage de la température du lait, le volume de lait dans le réservoir 1, etc.

L'accès au réservoir de refroidissement de lait après l'activation de l'élément d'actionnement 29 et la réception des données s'effectuent ainsi simultanément pendant ledit intervalle de temps, la réception des données ayant en outre lieu aussi après la fin de l'intervalle de temps.

Tandis que l'accès de l'ordinateur externe au dispositif de nettoyage, en particulier à une pompe pour l'acheminement du produit de nettoyage et à un diffuseur de nettoyage, pour la commande et/ou la régulation est normalement bloqué, certains composants de l'installation de refroidissement, en particulier l'agitateur et le refroidissement, peuvent aussi être réglés sans actionnement de l'élément d'actionnement 29 car ces composants créent un danger moindre que le dispositif de nettoyage 20.

L'intervalle de temps décrit doit de préférence durer moins de 40 minutes, en particulier entre 10 et 30 minutes.

L'élément d'actionnement ne peut alors être actionné que sur le terminal de contrôle 23 afin d'empêcher un prolongement de l'autorisation par l'opérateur sur l'ordinateur externe 24.

L'accès à la commande de certains composants, autrement dit de l'agitateur 8, du dispositif de nettoyage 20 et du circuit de refroidissement 5 du dispositif pour le refroidissement de lait peut aussi être effectué directement à l'aide du terminal de contrôle 23. L'opérateur du terminal de contrôle 23 et celui de l'ordinateur externe 24 ont de préférence la même priorité, pendant ledit intervalle de temps, pour commander les composants du dispositif pour le refroidissement de lait.

L'ordinateur externe peut exécuter, lorsque l'élément d'actionnement 29 est activé, différents menus dont l'accès externe est sinon désactivé.

Cela concerne en particulier les rubriques de menu suivantes et les sources de danger correspondantes :
- Agitation: fonctionnement de l'agitateur quand le terminal de contrôle est activé
- Nettoyage: fonctionnement du dispositif de nettoyage quand le terminal de contrôle est activé (résistances chaudes)
- Refroidissement: fonctionnement du ventilateur 17 du condenseur 9 et de l'agitateur quand le terminal de contrôle est activé
- Mode de test pour: experts mode d'expertise dans lequel les différents paramètres de chaque sous-ensemble peuvent être vérifiés, par exemple dans le cadre d'une télémaintenance.

L'élément d'actionnement 29 peut être, de préférence, un bouton d'actionnement qui peut être conformé comme un élément d'actionnement numérique ou comme un élément d'actionnement physique.

La personne qui utilise l'élément d'actionnement 29 est la première responsable de l'absence d'accident d'un opérateur sur ou dans le réservoir de refroidissement de lait. Elle peut également procéder à des réglages du réservoir de refroidissement de lait 1 et des différents composants à l'aide du terminal de contrôle 23, mais cette tâche peut aussi être transférée à l'opérateur de l'ordinateur externe 24. Cet opérateur ne dispose cependant alors que d'un intervalle de temps limité.

Facultativement, on peut prévoir un autre élément d'actionnement qui retire son accès à l'ordinateur externe.

L'activation d'un capteur, par exemple d'un capteur de contact, lors de l'actionnement du couvercle du trou d'homme 27 peut aussi entraîner la désactivation de l'accès de l'ordinateur externe, ce qui ajoute encore un niveau de sécurité au dispositif pour le refroidissement de lait.

Les signaux transmis à l'ordinateur peuvent être des paramètres de process et/ou des informations de process. Ils comprennent, entre autres, la modification de paramètres de process, par exemple la température du lait ou l'arrivée de lait. Une alarme peut aussi être transmise à l'ordinateur externe 24, par exemple quand la température du lait est dépassée, et émise par celui-ci.

Un historique, par exemple des défauts, ou des courbes de mesure peut aussi être transmis à l'ordinateur externe 24.

Le nettoyage du réservoir 1 par le dispositif de nettoyage 20 peut durer environ 30 minutes à 1 heure et peut être effectué, par exemple, tous les deux ou trois jours.

Un temps mort peut être ménagé entre le nettoyage et une nouvelle mise en service du réservoir, par exemple par l'activation du refroidissement.

L'état de fonctionnement du réservoir, par ex. vidange, état vide, nettoyage, collecte de lait, etc. peut être représenté par différentes couleurs dans un tableau d'affichage de l'ordinateur externe 24 et/ou du terminal de contrôle 23.

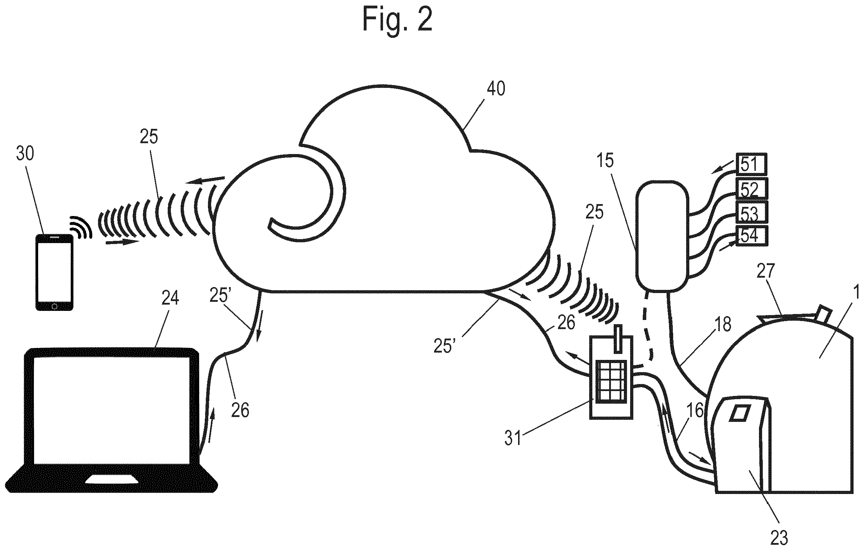

La Fig. 2 représente une autre vue de la transmission de données de signaux du terminal de contrôle 23 du réservoir de refroidissement de lait 1 à l'ordinateur externe 24.

Le réservoir de refroidissement de lait 1 comporte un trou d'homme 27 et peut comporter tous les autres composants du dispositif pour le refroidissement de lait représenté dans la Fig. 1.

Le convertisseur de mesure 15 et le module émetteur 31 sont également représentés, pour plus de clarté, à l'extérieur du boîtier du terminal de contrôle 23. Dans la réalité, toutefois, ces composants peuvent de préférence être intégrés dans le boîtier du terminal de contrôle.

Le convertisseur de mesure 15 est mis en évidence à part. Il peut s'agir d'un élément maître, par ex. d'un maître de liaison lO-Link d'un système de communication, de préférence d'un système de liaison lO-Link, qui peut être utilisé pour connecter des capteurs et actionneurs intelligents 51 à 54. La transmission de données entre le système de communication et les autres composants du terminal de contrôle 23 peut s'effectuer sous la forme d'un protocole de communication de bus, de préférence via Modbus. Les capteurs peuvent être, par exemple, des sondes de température pour surveiller la température du lait ou la température du produit de nettoyage ou un capteur de débit pour surveiller le volume d'arrivée du lait et/ou du liquide de nettoyage et similaires. Les actionneurs peuvent réaliser, par exemple, une prise de force sur le moteur de l'agitateur.

L'échange de données entre le module émetteur 31 et les autres composants du terminal de contrôle 23, en particulier de l'unité de commande et/ou d'analyse non représentée dans la Fig. 2, peut s'effectuer par une connexion Ethernet.

Le module émetteur 31 peut être conformé comme un routeur, en particulier un routeur VPN. Il peut établir, de préférence, une communication avec une infrastructure informatique 40 dans Internet, également appelée nuage ou cloud.

Le module émetteur 31 peut transmettre des signaux et des données à l'infrastructure informatique, comme, de préférence :
- la température du lait,
- la température de nettoyage ou la température du produit de nettoyage,
- la durée de fonctionnement de l'installation,
- les alarmes,
- les courbes d'évolution,
- les changements de paramètres,
- les données d'historique, par exemple sur les paramètres modifiés ou les alarmes,
- le moment de changement des modes de fonctionnement (lavage, refroidissement, vidange...).

La transmission des signaux peut passer par une ligne de signal sans fil 25 ou par une ligne de signal câblée 25'.

La transmission à l'infrastructure informatique permet que les signaux et ainsi les informations soient appelés simultanément par plusieurs ordinateurs externes 24 et 30 qui sont symbolisés, dans la Fig. 2, par un téléphone portable 30 et un ordinateur portable 24.

Quand un élément d'actionnement, non représenté dans le Fig. 2, est actionné, un seul ordinateur externe, ici l'ordinateur 24, peut accéder aux différents composants du réservoir de refroidissement de lait 1, en particulier au dispositif de nettoyage, mais facultativement aussi à l'agitateur et au circuit de refroidissement.

Il passe pour cela par une ligne de signal 26 qui peut être une ligne sans fil ou câblée. L'accès de l'ordinateur externe est limité dans le temps et l'élément d'actionnement ne peut être actionné que par une personne sur le terminal de contrôle 23, qui a de préférence vérifié d'abord le réservoir de refroidissement de lait et les autres composants du dispositif de refroidissement de lait.

Les moments critiques sont celui de l'accès quand le réservoir est vide, la remise en service du réservoir vidé, l'activation du nettoyage et l'exécution du nettoyage, qui se déroule le plus souvent en plusieurs cycles.

Dans un mode de vidange où le réservoir est vidé, l'élément d'actionnement 29 peut de préférence être désactivé ou aucun accès n'est accordé à l'ordinateur externe. La vidange est de préférence toujours prioritaire sur les autres accès.

La mise en service d'un réservoir 1 vidangé, en particulier, peut être effectuée par un accès de l'ordinateur externe 24.

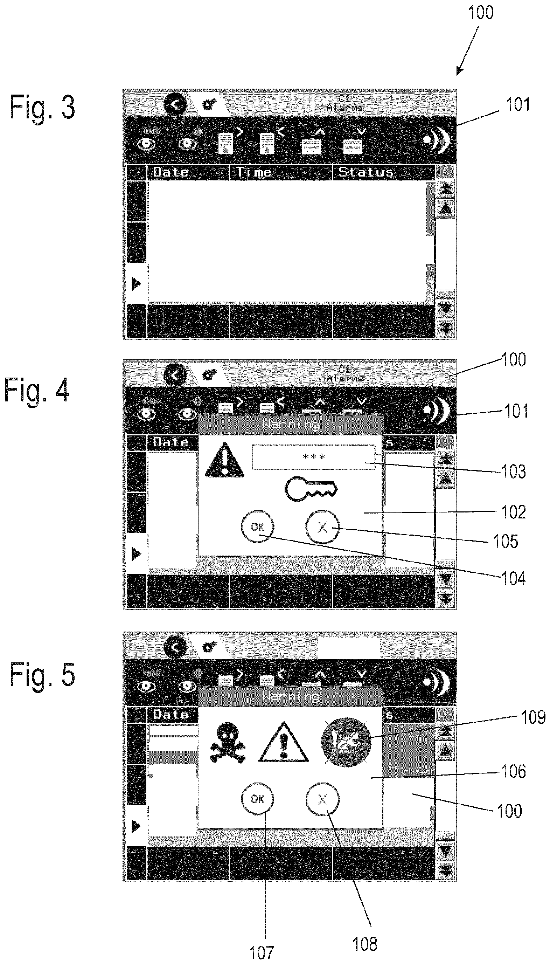

La Fig. 3 montre une première vue d'une première fenêtre de commande 100 sur l'écran du terminal de contrôle 23. Il peut s'agir d'un affichage de disponibilité.

Le symbole 101 représente l'élément d'actionnement pour l'autorisation d'un accès d'un ordinateur externe.

Cet ordinateur externe dispose d'un programme qui autorise son accès au dispositif pour le refroidissement de lait selon la présente invention. Le programme permet, par exemple, de sélectionner le réservoir de refroidissement de lait auquel il faut accéder. Quand une personne sur place est avertie par l'opérateur de l'ordinateur externe, par exemple par SMS ou par un appel, elle inspecte le réservoir de refroidissement de lait concerné et le reste du dispositif pour le refroidissement de lait et actionne ensuite l'élément d'actionnement 101 sur l'écran du terminal de contrôle.

Une fenêtre d'interrogation 102, avec un champ de saisie 103 dans lequel un code d'accès est demandé, s'affiche dans la fenêtre de commande 100. Ce code empêche de donner l'autorisation de l'accès externe à une personne non autorisée. Il peut être confirmé après la saisie par un tableau de commande 104 et 105 ou bien la saisie peut être abandonnée.

Une fenêtre d'affichage 106 avec des avertissements apparaît alors dans le tableau de commande. Le symbole 109 représente une personne passant par le trou d'homme d'un réservoir de refroidissement de lait. Il est destiné à rappeler encore une fois à la personne placée au terminal de contrôle sa responsabilité de vérifier le réservoir de refroidissement de lait. La saisie dans un tableau de commande 107 et 108 permet de confirmer la vérification, ou bien la saisie peut être abandonnée.

L'opérateur de l'ordinateur externe a désormais accès au dispositif pour le refroidissement de lait selon la présente invention.

Le tableau de commande 100 affiche alors une indication de temps 110 pour le temps d'accès restant. Cette indication de temps peut aussi être communiquée à l'ordinateur externe.

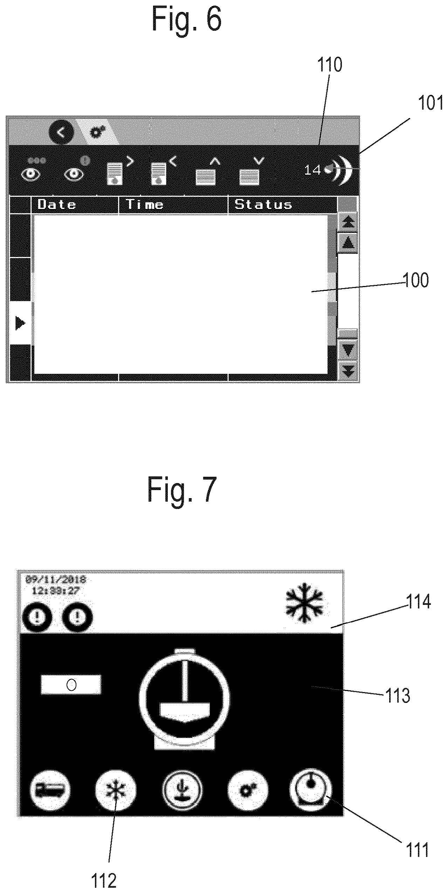

La Fig. 7 représente une vue d'une deuxième fenêtre de commande 113 sur l'ordinateur externe. L'opérateur y dispose d'un choix de différentes rubriques de menu.

Les tableaux de commande 112 et 111 sont particulièrement intéressants en cela qu'ils concernent le programme de refroidissement et le programme de nettoyage. L'actionnement de ces tableaux de commande ouvre des sous-menus et permet de régler les paramètres et de lancer le refroidissement ou le nettoyage.

En outre, la température actuelle du lait, par exemple, est transmise dans le tableau de commande 114. En dehors de l'écoulement du temps d'accès, les tableaux de commande 111 et 112 sont désactivés et, par exemple, grisés. L'affichage de la température actuelle demeure.

### Référence

- 1: Réservoir de refroidissement de lait
- 2: Entrée du lait
- 3: Sortie du lait
- 4: Évaporateur
- 5: Circuit de refroidissement
- 6: Compresseur
- 7: Moteur
- 8: Agitateur
- 9: Condenseur
- 10: Moteur
- 11: Soupape d'expansion
- 12: Ligne de signal
- 13: Sonde de température
- 14: Ligne de signal
- 15: Convertisseur de mesure
- 16: Unité de commande et/ou d'analyse
- 17: Ventilateur
- 18: Ligne de signal
- 19: Ligne de signal
- 20: Dispositif de nettoyage
- 21: Ligne de signal
- 22: Diffuseur
- 23: Terminal de contrôle
- 24: Ordinateur externe
- 25: Voie de transmission de signaux
- 26: Voie de transmission de signaux
- 27: Trou d'homme
- 28:
- 29: Élément de commande
- 30: Téléphone portable
- 31: Module émetteur
- 40: Infrastructure informatique
- 51: Capteur ou actionneur
- 52: Capteur ou actionneur
- 53: Capteur ou actionneur
- 54: Capteur ou actionneur
- 100: Fenêtre de commande
- 101: Symbole / élément d'actionnement
- 102: Fenêtre d'interrogation
- 103: Zone de saisie
- 104: Tableau de commande
- 105: Tableau de commande
- 106: Fenêtre d'affichage
- 107: Tableau de commande
- 108: Tableau de commande
- 109: Avertissement
- 110: Indication du temps
- 111: Élément de commande - Menu de nettoyage
- 112: Élément de commande - Menu de refroidissement
- 113: Fenêtre de commande
- 114: Tableau d'affichage

## Revendications

1. Dispositif pour le refroidissement de lait comprenant au moins un réservoir de refroidissement du lait (1) accessible par un trou d'homme qui est fermé par un couvercle et au moins un circuit de refroidissement (5) pour refroidir du lait à l'intérieur du réservoir de refroidissement du lait (1), dans lequel le réservoir de refroidissement du lait (1) présente un dispositif de nettoyage (20) et dans lequel le dispositif pour le refroidissement du lait présente un terminal de contrôle (23) à portée de vue du réservoir de refroidissement du lait (1),
**caractérisé en ce que**
le terminal de contrôle (23) présente un élément d'actionnement (29) dont l'actionnement déclenche l'autorisation d'accès au dispositif de nettoyage(20) par un ordinateur externe(24) où l'autorisation est limitée dans le temps à l'intérieur d'un intervalle de temps ; et
dans lequel le terminal de contrôle (23) est équipé pour émettre des données, en particulier concernant les conditions de process dans le réservoir de refroidissement du lait (1), indépendamment de l'état de l'élément d'actionnement (29).

2. Dispositif pour le refroidissement de lait selon la revendication 1, **caractérisé en ce que** l'accès est limité dans le temps.

3. Dispositif pour le refroidissement de lait selon la revendication 1 ou 2, **caractérisé en ce que** l'actionnement de élément d'actionnement (29) déclenche une autorisation d'accès à des composants du circuit de refroidissement (5) par un ordinateur externe (24).

4. Dispositif pour le refroidissement de lait selon la revendication 1 ou 2, **caractérisé en ce que** le dispositif présente un agitateur (8), l'actionnement de l'élément d'actionnement (29) déclenchant une autorisation d'accès à l'agitateur (8) par un ordinateur externe (24).

5. Dispositif pour le refroidissement de lait selon l'une des revendications précédentes, **caractérisé en ce que** le terminal de contrôle (23) présente un affichage du temps d'accès restant par l'ordinateur externe (24).

6. Procédé d'administration d'un dispositif pour le refroidissement de lait comprenant au moins un réservoir de refroidissement du lait (1) accessible par un trou d'homme qui est fermé par un couvercle et au moins un circuit de refroidissement (5) pour refroidir du lait à l'intérieur du réservoir de refroidissement du lait (1),
dans lequel le réservoir de refroidissement du lait (1) comporte un dispositif de nettoyage(20) avec lequel un mode de nettoyage peut être exécuté et dans lequel le dispositif pour le refroidissement du lait présente un terminal de contrôle (23) à portée de vue du réservoir de refroidissement du lait (1), **caractérisé en ce que** le terminal de contrôle (23) présente un élément d'actionnement (29) dont l'actionnement déclenche une autorisation de réglage du mode de nettoyage par un ordinateur externe(24) ; et
dans lequel le dispositif pour le refroidissement de lait exécute une transmission de données à l'ordinateur externe ou à d'autres ordinateurs externes (24) indépendamment de l'état de l'élément d'actionnement (29) et que l'autorisation est limitée dans le temps à l'intérieur d'un intervalle de temps

7. Procédé selon la revendication 6, **caractérisé en ce que** l' intervalle de temps dure au maximum 40 minutes, en particulier de 10 à 30 minutes.

8. Procédé selon la revendication 6 ou 7, **caractérisé en ce que** l'actionnement de l'élément d'actionnement (29) déclenche une autorisation de réglage d'un mode de refroidissement par un ordinateur externe (24).

9. Procédé selon l'une des revendications 6 à 8, **caractérisé en ce que**
l'actionnement de l'élément d'actionnement (29) déclenche une autorisation de mise en service ou une modification du mode de fonctionnement du réservoir de refroidissement du lait (1) et du terminal de contrôle (23) par un ordinateur externe (24) et ainsi un changement de température de résistances dans le terminal de contrôle (23).

10. Procédé selon l'une des revendications 6 à 9, **caractérisé en ce que** l'actionnement de l'élément d'actionnement (29) déclenche une autorisation d'un mode de test pour l'accès individuel à différents éléments du dispositif de refroidissement du lait, en particulier de parties de l'agitateur (8), du dispositif de nettoyage (20) et/ou du circuit de refroidissement (5).

11. Procédé selon l'une des revendications 6 à 10, **caractérisé en ce que**
l'accès de l'ordinateur externe (24) au dispositif de refroidissement de lait s'effectue par une communication sans fil et/ou par un réseau filaire.

12. Procédé selon l'une des revendications 6 à 11, **caractérisé en ce que**
les données sont transmises par le dispositif pour le refroidissement de lait à une infrastructure informatique, en particulier un nuage (40), de telle sorte que les données transmises puissent être consultées simultanément par plusieurs ordinateurs, en particulier par une communication sans fil.

13. Procédé selon l'une des revendications 6 à 12, **caractérisé en ce que**
les données transmises comprennent au moins une ou plusieurs des données suivantes :
température du lait ;
quantité de lait ;
vitesse d'agitation ;
conditions de nettoyage en mode de nettoyage, de préférence température d'un ou plusieurs produits nettoyants et/ou dosage du ou des produits nettoyants ;
un ou plusieurs diagrammes d'évolution concernant de préférence la température du lait, la quantité de lait et/ou le mode de nettoyage ;
historique, de préférence de changements du processus, de préférence de changements du mode de fonctionnement, de messages d'erreur et/ou de changements de valeurs limites ;
affichage des valeurs limites existantes ;
alarme ; et/ou
affichage du mode de fonctionnement actuel, en particulier du mode de refroidissement, de l'arrêt, du mode de vidange ou du mode de nettoyage.

14. Procédé selon l'une des revendications 6 à 13, **caractérisé en ce que**
l'actionnement de l'élément d'actionnement (29) déclenche une autorisation de réglage de valeurs limites ou un réglage de modes de fonctionnement.

15. Procédé selon l'une des revendications 6 à 14, **caractérisé en ce que**
le réservoir de refroidissement du lait accessible est accessible à travers un trou d'homme (27) qui est fermé par un couvercle, le trou d'homme (27) présentant un capteur qui affiche l'état d'ouverture du couvercle et l'accès de l'ordinateur externe (24) étant désactivé quand l'état d'ouverture du couvercle change.

## Patentansprüche

1. Vorrichtung zur Milchkühlung umfassend wenigstens einen begehbaren Milchkühltank (1), der durch ein Mannloch zugänglich ist, das durch einen Deckel verschlossen ist, und wenigstens einen Kühlkreislauf (5) zum Abkühlen der Milch innerhalb des Milchkühltank (1), wobei der Milchkühltank (1) eine Reinigungsvorrichtung (20) aufweist und wobei die Vorrichtung zum Kühlen der Milch ein Kontrollterminal (23) in Sichtweite des Milchkühltanks (1) aufweist,
**dadurch gekennzeichnet, dass**
das Kontrollterminal (23) ein Betätigungselement (29) aufweist, bei dessen Betätigung eine Freigabe zum Zugriff auf die Reinigungsvorrichtung (20) durch einen externen Rechner (24) erfolgt, wobei die Freigabe innerhalb eines Zeitintervalls zeitlich begrenzt ist; und
wobei das Kontrollterminal (23) ausgerüstet ist, zum Senden von Daten, insbesondere betreffend die Prozessbedingungen im Milchkühltank (1), unabhängig vom Zustand des Betätigungselements (29).

2. Vorrichtung zur Milchkühlung nach Anspruch 1, **dadurch gekennzeichnet, dass** der Zugriff zeitlich limitiert ist.

3. Vorrichtung zur Milchkühlung nach Anspruch 1 oder 2, **dadurch gekennzeichnet, dass** die Betätigung des Betätigungselements (29) eine Freigabe des Zugriffs auf Bauteile des Kühlkreislaufs (5) durch einen externen Rechner (24) erfolgt.

4. Vorrichtung zur Milchkühlung nach Anspruch 1 oder 2, **dadurch gekennzeichnet, dass** die Vorrichtung ein Rührwerk (8) aufweist, wobei durch die Betätigung des Betätigungselements (29) eine Freigabe zum Zugriff auf das Rührwerk (8) durch einen externen Rechner (24) erfolgt.

5. Vorrichtung zur Milchkühlung nach einem der vorhergehenden Ansprüche, **dadurch gekennzeichnet, dass** das Kontrollterminal (23) eine Anzeige der verbleibenden Zeit des Zugriffs durch den externen Rechner (24) aufweist.

6. Verfahren zum Verwalten einer Vorrichtung zur Milchkühlung, umfassend wenigstens einen begehbaren Milchkühltank (1), der durch ein Mannloch zugänglich ist, das durch einen Deckel verschlossen ist, und wenigstens einen Kühlkreislauf (5) zum Abkühlen von Milch in dem Milchkühltank (1),
wobei der Milchkühltank (1) eine Reinigungsvorrichtung (20) umfasst, mit der ein Reinigungsmodus ausführbar ist, und wobei die Vorrichtung zur Milchkühlung ein Kontrollterminal (23) in Sichtweite des Milchkühltanks (1) aufweist,
**dadurch gekennzeichnet, dass** das Kontrollterminal (23) ein Betätigungselement (29) aufweist, dessen Betätigung eine Freigabe zur Einstellung des Reinigungsmodus durch einen externen Rechner (24) erfolgt; und
wobei die Vorrichtung zur Milchkühlung eine Datenübertragung von Daten an den einen externen Rechner oder an weitere externen Rechner (24) unabhängig vom Zustand des Betätigungselements (29) durchführt, und dass die Freigabe innerhalb eines Zeitintervalls zeitlich begrenzt ist.

7. Verfahren nach Anspruch 6, **dadurch gekennzeichnet, dass** das Zeitintervall maximal 40 Minuten, insbesondere 10 bis 30 Minuten, dauert.

8. Verfahren nach Anspruch 6 oder 7, **dadurch gekennzeichnet, dass** die Betätigung des Betätigungselements (29) eine Freigabe der Einstellung eines Kühlmodus durch einen externen Computer (24) erfolgt.

9. Verfahren nach einem der Ansprüche 6 bis 8, **dadurch gekennzeichnet, dass** durch die Betätigung des Betätigungselements (29) eine Freigabe zur Inbetriebnahme oder eine Änderung des Betriebsmodus des Milchkühltanks (1) und des Kontrollterminals (23) durch einen externen Computer (24) und somit eine Temperaturänderung von Widerständen in dem Steuerterminal (23) erfolgt.

10. Verfahren nach einem der Ansprüche 6 bis 9, **dadurch gekennzeichnet, dass** durch die Betätigung des Betätigungselements (29) eine Freigabe eines Testmodus zum Einzelzugriff auf verschiedene Bauteile der Vorrichtung zur Milchkühlung, insbesondere von Bauteilen des Rührwerks (8), der Reinigungsvorrichtung (20) und/oder des Kühlkreislaufs (5), erfolgt.

11. Verfahren nach einem der Ansprüche 6 bis 10, **dadurch gekennzeichnet, dass** der Zugriff des externen Rechners (24) auf die Vorrichtung zur Milchkühlung durch eine Drahtlosverbindung und/oder durch ein drahtgebundenes Netzwerk erfolgt.

12. Verfahren nach einem der Ansprüche 6 bis 11, **dadurch gekennzeichnet, dass** die Datenübertragung durch die Vorrichtung zur Milchkühlung an eine IT-infrastruktur, insbesondere eine Cloud (40), erfolgt, sodass die übertragenen Daten von mehreren Rechnern zeitgleich, insbesondere über eine Drahtlosverbindung, abrufbar sind.

13. Verfahren nach einem der Ansprüche 6 bis 12, **dadurch gekennzeichnet, dass** die übertragenen Daten zumindest eine oder mehrere der folgenden Daten umfassen:
die Milchtemperatur;
die Milchmenge;
die Rührgeschwindigkeit;
die Reinigungsbedingungen im Reinigungsmodus, vorzugsweise die Temperatur eines oder mehrerer Reinigungsmedien und/oder die Dosierung des oder der Reinigungsmedien;
eines oder mehrere Verlaufsdiagramme, vorzugsweise betreffend die Milchtemperatur, die Milchmenge und/oder des Reinigungsmodus;
die Historie vorzugsweise von Prozessänderungen, vorzugsweise von Änderungen des Betriebsmodus, von Fehlermeldungen und/oder von Änderungen von Grenzwerten;
die Anzeige bestehender Grenzwerte;
Warnmeldungen; und/oder
die Anzeige des aktuellen Betriebsmodus, insbesondere des Kühlmodus, des Stillstands, des Entleerungsmodus oder des Reinigungsmodus.

14. Verfahren nach einem der Ansprüche 6 bis 13, **dadurch gekennzeichnet, dass** durch die Betätigung des Betätigungselements (29) eine Freigabe der Einstellung von Grenzwerten oder eine Einstellung von Betriebsmodi erfolgt.

15. Verfahren nach einem der Ansprüche 6 bis 14, **dadurch gekennzeichnet, dass** der begehbare Milchkühltank durch ein Mannloch (27) begehbar ist, das durch einen Deckel verschlossen ist, wobei das Mannloch (27) einen Sensor aufweist, der den Öffnungszustand des Deckels anzeigt und wobei bei Änderung des Öffnungszustandes des Deckels eine Deaktivierung des Zugriff des externen Rechners (24) erfolgt.

## Claims

1. A milk cooling device comprising at least one milk cooling tank (1) accessible via a manhole which is closed by a lid and at least one cooling circuit (5) for cooling milk inside the milk cooling tank (1), in which the milk cooling tank (1) has a cleaning device (20) and in which the milk cooling device has a control terminal (23) within sight of the milk cooling tank (1),
**characterised in that**
the control terminal (23) has an actuating element (29), the actuation of which authorises access to the cleaning device (20) by an external computer (24) where authorisation is time-limited within a time interval; and in which the control terminal (23) is equipped to output data, in particular relating to process conditions in the milk cooling tank (1), independently of the state of the actuating element (29).

2. A milk cooling device according to Claim 1, **characterised in that** access is time-limited.

3. A milk cooling device according to Claim 1 or 2, **characterised in that** actuation of the actuating element (29) authorises access to components of the cooling circuit (5) by an external computer (24).

4. A milk cooling device according to Claim 1 or 2, **characterised in that** the device has a stirrer (8) with actuation of the actuating element (29) authorising access to the stirrer (8) by an external computer (24).

5. A milk cooling device according to one of the previous claims, **characterised in that** the control terminal (23) has a display of the remaining access time by the external computer (24).

6. A method for managing a milk cooling device comprising at least one milk cooling tank (1) accessible via a manhole which is closed by a lid and at least one cooling circuit (5) for cooling milk inside the milk cooling tank (1), in which the milk cooling tank (1) comprises a cleaning device (20) with which a cleaning mode can be carried out and in which the milk cooling device has a control terminal (23) within sight of the milk cooling tank (1), **characterised in that** the control terminal (23) has an actuating element (29), the actuation of which authorises adjustment of the cleaning mode by an external computer (24); and in which the milk cooling device transmits data to the external computer or to other external computers (24) independently of the state of the actuating element (29) and **in that** the authorisation is time-limited within a time interval.

7. A method according to Claim 6, **characterised in that** the time interval lasts for a maximum of 40 minutes and in particular for 10 to 30 minutes.

8. A method according to Claim 6 or 7, **characterised in that** actuation of the actuating element (29) authorises adjustment of a cooling mode by an external computer (24) .

9. A method according to one of Claims 6 to 8, **characterised in that** actuation of the actuating element (29) authorises start-up or modification of the operating mode of the milk cooling tank (1) and of the control terminal (23) by an external computer (24) and thus a change in temperature of resistors in the control terminal (23).

10. A method according to one of Claims 6 to 9, **characterised in that** actuation of the actuating element (29) authorises a test mode for individual access to different elements of the milk cooling device, in particular parts of the stirrer (8), of the cleaning device (20) and/or of the cooling circuit (5).

11. A method according to one of Claims 6 to 10, **characterised in that** access by the external computer (24) to the milk cooling device is effected by wireless communication and/or by a wired network.

12. A method according to one of Claims 6 to 11, **characterised in that** the data are transmitted by the milk cooling device to an item of computing infrastructure, in particular a cloud (40), in such a manner that the transmitted data can be consulted simultaneously by a plurality of computers, in particular by wireless communication.

13. A method according to one of Claims 6 to 12, **characterised in that** the transmitted data comprise at least one or more of the following items of data:
temperature of the milk;
quantity of milk;
stirring speed;
cleaning conditions in cleaning mode, preferably temperature of one or more cleaning product(s) and/or rate of addition of cleaning product(s);
one or more trend diagrams, preferably relating to the temperature of the milk, the quantity of milk and/or the cleaning mode;
history, preferably of method changes, preferably of changes in operating mode, error messages and/or changes in limit values;
display of existing limit values;
alarm; and/or
display of current operating mode, in particular of cooling mode, shutdown, draining mode or cleaning mode.

14. A method according to one of Claims 6 to 13, **characterised in that** actuation of the actuating element (29) authorises adjustment of limit values or adjustment of operating modes.

15. A method according to one of Claims 6 to 14, **characterised in that** the accessible milk cooling tank is accessible through a manhole (27) which is closed by a lid, the manhole (27) having a sensor which displays the opening state of the lid and access by the external computer (24) being disabled when the opening state of the lid changes.
